# EUROPEAN PATENT SPECIFICATION

(11) **EP 0 439 646 B1**
(45) Date of publication and mention of the grant of the patent: **15.03.1995**
(21) Application number: 90101759.0
(22) Date of filing: 30.01.1990
(51) Int. Cl.: H04L 12/44

(54) **Optical star network protocol and system with minimised delay between consecutive packets**
System und Protokoll für ein optisches Sternnetz mit minimaler Verzögerung zwischen aufeinanderfolgenden Datenpaketen
Système et protocole pour réseau optique en étoile ayant un délai minimal entre paquets consécutifs

(43) Date of publication of application: 07.08.1991
(73) Proprietor: Hewlett-Packard Company, Palo Alto, California 94304 (US)
(72) Inventor: McKeown, Nicholas William, c/o Hewlett-Packard Ltd, Stoke Gifford, Bristol BS12 6QZ (GB)
(74) Representative: Squibbs, Robert Francis

(56) References cited:
- EP-A- 0 255 442
- IBM TECHNICAL DISCLOSURE BULLETIN, vol. 32, no. 5B, October 1989, pages 357-361, New York, US; "Adaptive slotted bus Metropolitan area network protocol"

## Description

The present invention relates to a communication system, and in particular to a digital communication system between a plurality of stations such as digital computers. The present invention is particularly, but not exclusively, applicable to such communication systems in the form of a star in which peripheral stations are connected directly or indirectly to a central node.

Any communications system must utilize a protocol for determining the sequence and nature of the permitted communication over the system by any station on it. In the past, protocols for star networks have generally been those which were developed for other networks such as rings or buses. Thus, it is known to operate star networks on the basis of token passing protocols that were originally developed for ring networks. With such protocols, a logical "token" is passed from station to station and any station "holding" the token is allowed to transmit data. A disadvantage of token-passing protocols is that the gap (measured in bits) between the end of transmission by one station, and the start of transmission by the next station to receive the token, will increase with the data rate. This overhead caused by the passing of the token, places both a lower bound on the access delay and an upper bound on the efficiency of utilisation of the system, and in addition limits the efficiency under low loading. Thus, token passing protocols are not efficient on a star network. Furthermore, in the case of lost or duplicate tokens, a considerable distributed management problem is created.

Star networks have also been operated using random access protocols, such as CSMA/CD (Carrier Sense Multiple Access/Collision Detect). However, with such protocols, the minimum length of the transmission by a station must increase with the data rate, and this produces inefficiency. An increase in data rate is not compensated for by a reduction in access delay, since the number of "collisions" between data from different stations will remain approximately constant.

Another known type of protocol for broadcast communications systems is the so-called bit-map protocol; such protocols have previously been used, for example, in packet radio systems. Typically, in a bit-map protocol the stations reserve the use of subsequent slots in an operating cycle by setting an appropriate bit in a reservation field (or bit-map); the stations thereafter use their reserved slots to transmit data. As the stations are part of a broadcast system, the bit-map is available to all stations to enable them to judge when they should transmit their data in the main part of the operating cycle.

The application of a bit-map protocol to a star network does not, by itself, appear to have any significant advantages. However, the inventor has found that modified bit-map protocols can be used to advantage on star networks. Indeed, it has been found that advantages can still be achieved using protocols similar to bit-map protocols but without an explicit bit-map; furthermore, the protocols under consideration can be used to advantage on network topologies additional to star topologies.

Protocols are also known where two data transmissions may exist on the network at the same time which permits an increase in efficiency over protocols where only one transmission can validly exist at a time. Thus, certain existing protocols for ring or dual-bus networks provide for the co-existence of two or more transmissions on the network at the same time; however such protocols rely on the inherent characteristics of these topologies and cannot be readily transferred for use with other topologies such as star networks. Another example of the presence at the same time of two transmissions on the same network is known in relation to a tree-configured telephone network; in the known arrangement, the local telephone exchange determines the distance from the exchange of each user and then asks each user to transmit its data at such a time as to avoid collisions with the other users but possibly at a time to result in more than one transmission being simultaneously present on the network.

A further example of the simultaneous presence of two transmissions on the same network is disclosed in European Patent Specificaiton EP-A-0,255,442 (Alcatel). This specification describes a cyclically operating optical star network in which each cycle is based on a two-part frame, the first part of which (a reservation phase) involves every station transmitting "queuing state" information during a predetermined time slot. This queuing state information is used by every station to determine the order of data packet transmission by stations in the second part of the following frame. The queuing state information also includes an indication of data packet type thereby enabling each station to determine how long it must wait from the start of a frame (as indicated by a "driver message") before it starts trasmitting its data packets. In addition, each station measures its distance (in terms of round trip time) from the central node of the star network. As a result, a station can time its transmission of data packets to start before the immediately preceding station has finished its transmission such that the station's transmissions reach the central node just after those of the immediately preceding station have transited the node.

The arrangement described in EP-A-0,255,442, whilst providing a complex reservation system, still lacks flexibility in that, because reservations must be made in the preceding cycle and timing is effected from the start of a frame, there is no possibility of taking account of operational changes occurring during a cycle. Furthermore, the described protocol is only disclosed in the context of star topologies and it is not apparent that it has broader application.

An arrangement of the same general type is also disclosed in IBM Technical Disclosure bulletin Vol. 32, No. 5B, October 1989 under the heading "Adaptive Slotted Bus Metropolitan Area Network Protocol". This system does not utilise a reservation phase but, again, each station times its transmission from the start of a cycle of operation. The stations are aware of the order of data transmission of the stations in a cycle and listen to the transmission of other stations to effect certain control and management functions.

According to one aspect of the present invention, there is provided a communications system having a plurality of stations interconnected by transmission paths for the broadcast transmission of data therebetween, the system being arranged to operate cyclically with each station being permitted to transmit data each cycle in a predetermined order of permitted transmissions, each data transmission including identity information indicative of the identity of the transmitting station, and at least one of said stations comprising;
- transmitting means for transmitting data over said transmission paths;
- receiving means for receiving data over said transmission paths;
- transmission control means operative when said one station is the first station with data to transmit in a current cycle, to cause said transmitting means to transmit that data, and when said one station has data to transmit in a cycle but is not said first station, to cause said transmitting means to begin transmitting data in the current cycle at a time which is in advance of when said receivng means will have finished receiving any data transmitted from the station immediately preceding the current station in said predetermined order, but which is judged by the transmission control means will avoid the transmissions of said one station colliding at any other station with any transmissions from said immediately-preceding station;

characterised in that said transmission control means comprises: first sub-means for determining, in the case where the said one station is not said first station, when said one station is the next station to transmit in a cycle by monitoring data transmissions received in the current cycle by the receiving means to identify the originating station of the transmissions, and second sub-means operative, when said first means has determined that the station is the next to transmit in the current cycle, to cause said transmitting means to transmit data at a timing dependent on the actual reception by said receiving means of transmissions from the immediately preceding station in the sequence of stations with data to transmit in the current cycle, this timing being in advance of when said one station has finished receiving data from said immediately-preceding station in said sequence at least in the case where said immediately-preceding station in said sequence is the station immediately preceding said one station in said order of permitted transmission.

By monitoring actual transmissions and timing station transmissions accordingly, a communication system of this form offers significant flexibility as compared with that of EP-A-0,255,442 and the aforesaid IBM Technical Disclosure Bulletin. For example, the amount of data to be transmitted need not be pre-specified provided an appropriate indication is contained in the transmission itself. Furthermore, timing accuracy is less critical in the present system.

Preferably, said second sub-means comprises:
(a) ascertaining means for ascertaining how far off is the end of data reception from said immediately-preceding station in said sequence; and,
(b) means for initiating transmission of data by said transmitting means at a time preceding said end of data reception by an amount, no greater than the time: t₁ + t₀ + t₂
   where:
   - t₁ is the time taken for a data transmission from said one station to pass along an outward said transmission path from the station to reach any said transmission path, hereinafter the common path, used by said immediately-preceding station in said sequence in transmitting its data to all other stations except said one station,
   - t₂ is the time taken for a data transmission from said immediately-preceding station to pass from said common path to said one station along an inward said transmission path thereto, and,
   - t₀ is the time taken for a data transmission from said immediately-preceding station to pass along the common path from said outward path to said inward path, the time t₀ being negative where the data transmission from said immediately-preceding station passes said inward path before said outward path.

By using fixed-size data packets to transmit data, or variable size data packets with a header containing size information, it becomes a relatively simple task for a station to ascertain when the reception of a current transmission will end.

In the case of a star network with a central node, collision of the transmissions from one station with those from the immediately-preceding station in the transmission sequence, can be avoided if said one station defers start of transmission to a time preceding the end of data reception from said immediately preceding station by an amount no greater than the round trip time for a transmission from the station to return via the central node.

Preferably, to facilitate the determination by said one station of whether it is the first station in said sequence or when it is the next-to-transmit station, the system is arranged to operate a bit-mapped protocol. More particularly, the system is preferably such that each cycle has an initial reservation phase during which each station is arranged to indicate in a corresponding reservation time slot if it is to transmit data in that cycle, said one station being operative to monitor these reservation indications whereby to determine whether it is said first station in said sequence and, if not, to determine the identity of said immediately-preceding station in said sequence, said one station being further operative when not said first station to determine when it is the station next to transmit by identifying the receipt of data from said immediately-preceding station.

A similar scheme may also be applied to the acknowledgement of successful data transmission. The purpose of transmitting data over the network is, of course, to send it to a particular station on the network. When the data is received by that other station, the receiving station should have some method of acknowledging successful receipt. Therefore, each cycle may further have an acknowledgement phase appearing in the cycle after the data transmissions. When each station has successfully received data from another station, it can acknowledge this by setting a reservation time slot in the reservation phase, this time slot being one associated with that other station, whereby to indicate to the network that the data has been transmitted successfully.

The use of reservation slots may be further expanded. In the application of the present invention to some networks, it may be found that some stations need as low an access delay as possible, and this may be compromised by the fact that a station which has not made a reservation cannot transmit data until the next cycle. Provision can therefore be made for at least some of the stations automatically to make a reservation irrespective of whether they have data to transmit or not. Then, if a station which has automatically made a reservation does not have data to transmit, this must be recognized by the next successive station which does have data to transmit. This may then lead to delays within the cycle, but since automatic reservation is of primary benefit to those stations which have much data to transmit, it is likely that the delays will not prove a problem in practice.

The determination by each station of when it is to transmit within the sequence of stations with data to transmit, does not necessarily require the use of a bit-mapped protocol with a reservation scheme. As an alternative, it is possible for each station to detect if the immediately preceding station, and indeed successive preceding stations before that, are to transmit, on the basis of detection of the presence or absence of their data transmissions. Where the station detects that the immediately preceding station, and successively preceding stations, have not transmitted data, it may then promptly on that recognition, transmit its own data. Of course, the delays between the data transmission may then be longer, degrading the efficiency of utilisation. However, access delays may be reduced and the implementation is simpler. Therefore, in some situations, this alternative may be preferred.

An embodiment of the present invention will now be described in detail, by way of example, with reference to the accompanying drawings in which;
Figure 1 shows a star network;
Figure 2 shows one cycle of operation for a network operating according to the present invention;
Figure 3 shows a second alternative cycle for a network operating according to the present invention;
Figure 4 shows a third alternative cycle for a network according to the present invention; and
Figure 5 shows a star network with couplers linking groups of stations to the central star node;
Figure 6A shows the data paths of the central node 101 of the networks of Figures 1 and 5;
Figure 6B shows the data paths of the couplers of the network of Figure 5; and
Figure 7A and 7B are diagrams of the signal paths near a station in a general network.

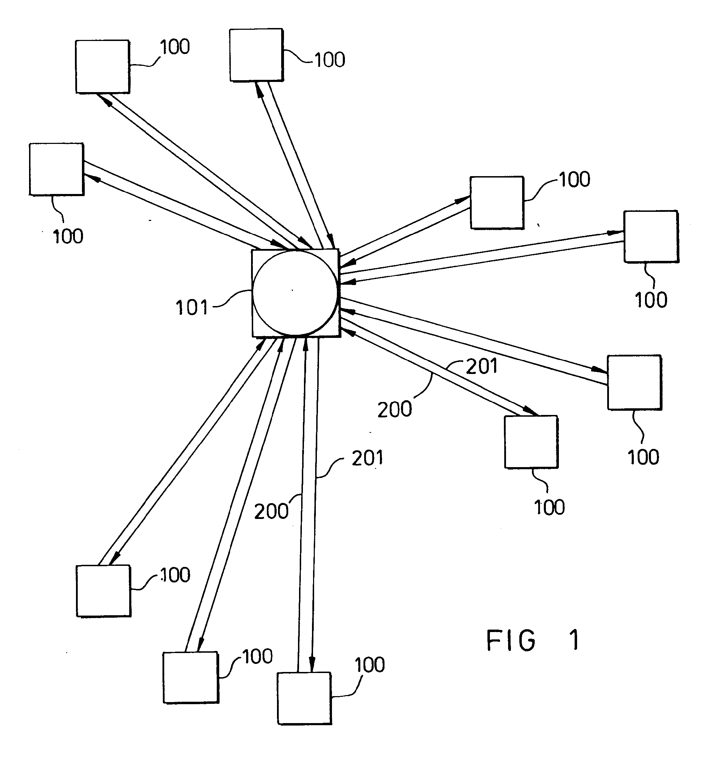

Referring first to Figure 1 a star network comprises a plurality of stations 100 connected to a central node 101. Each of those stations 100 may be, for example, a digital computer.

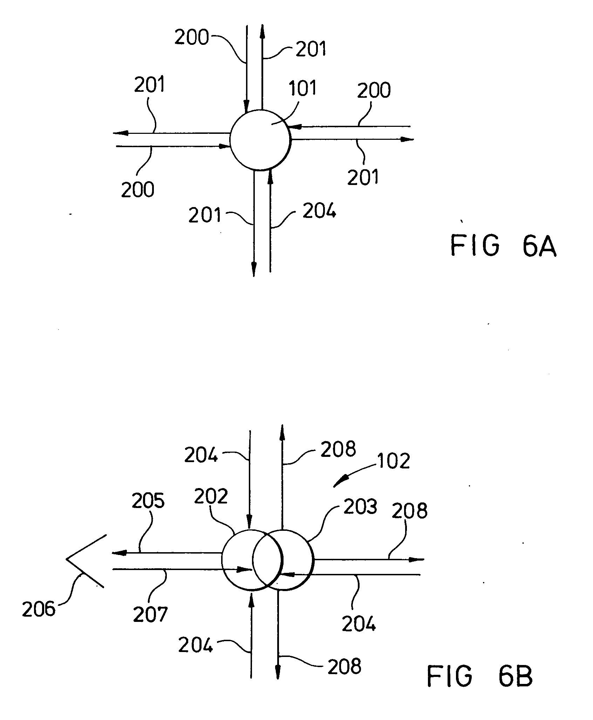

The network shown in Figure 1 may be, for example, a passive optical star network with a passive star node 101 of the general form shown in Figure 6A. The node 101 of Figure 6A has a plurality of input lines 200 coming from the stations 100 and a plurality of output lines 201 leading to the stations 100. A signal on any one of the input lines 200 will be distributed to all output lines 201.

Such passive optical star networks have important advantages over active star, ring, or bus. For example, although the passive star has a potential single point of failure (at the central passive star coupler node 101) it requires no power, is immune to electromagnetic interference, and has no mechanical or electrical components. It is therefore extremely reliable and does not need optical transceivers, switches or cables. Furthermore, by reducing the number of optical components, passive star optical networks may be constructed more cheaply than other optical networks. Additionally, many localised applications suit a star topology better than a bus or ring. For example, it is frequently the case that each user of a network, or work group, is connected to a central wiring point for e.g. power. The present invention is therefore particularly applicable to passive optical star networks, although it is also applicable to passive electrical star networks, active star networks and other topologies.

In the present invention, as applied to the star network shown in Figure 1, the network operates in a succession of cycles in each of which each station 100 is permitted to transmit one data packet through the network with the order of permitted transmission among the stations in each cycle being predetermined. The stations 100 time their transmission such as to avoid packet collisions at the receiving stations. Since the primary potential point of collision of such data packets is central node 101, it is the time of arrival of the packets at that central node 101 which is best examined when considering how to render transmission over the network collision free.

Of course, one possible scheme is for the station next-to-transmit in the sequence of stations with data to transmit in a cycle, to begin its transmission only after it has heard the immediately preceding station in said sequence complete its transmission. However, since there is inevitably a delay between transmission of a data packet by a station 100 and its reception at the central node 101, waiting until the end of transmission by the immediately-preceding station, is inefficient (it should be noted that the distances between the station 100 and the central node 101 may be more than a kilometre, and so those delay times could become significant). Accordingly, each of the stations of the present network is so arranged that when it has a data packet to transmit, it will start transmitting prior to the end of receipt of the packet sent by the station immediately preceding it in said sequence by an amount judged to just avoid collision at the central node 101. In the simple network of Figure 1, this amount is just less than the round trip time between the station 100 and central node 101.

To implement this scheme, each station is arranged measure how far it is (in terms of transmission time) from the central node 101.

The round trip delay time is dependent on the electronics of the system, the fibre optic transmitter, the fibre itself, and any intermediate optical couplers (not shown). Whilst it may be possible accurately to control the length of the fibre, the delay tolerance through the other components cannot be known sufficiently precisely for measurement to an accuracy of one bit. However, it is feasible for a station to measure within a certain tolerance how many bit times it is from the centre.

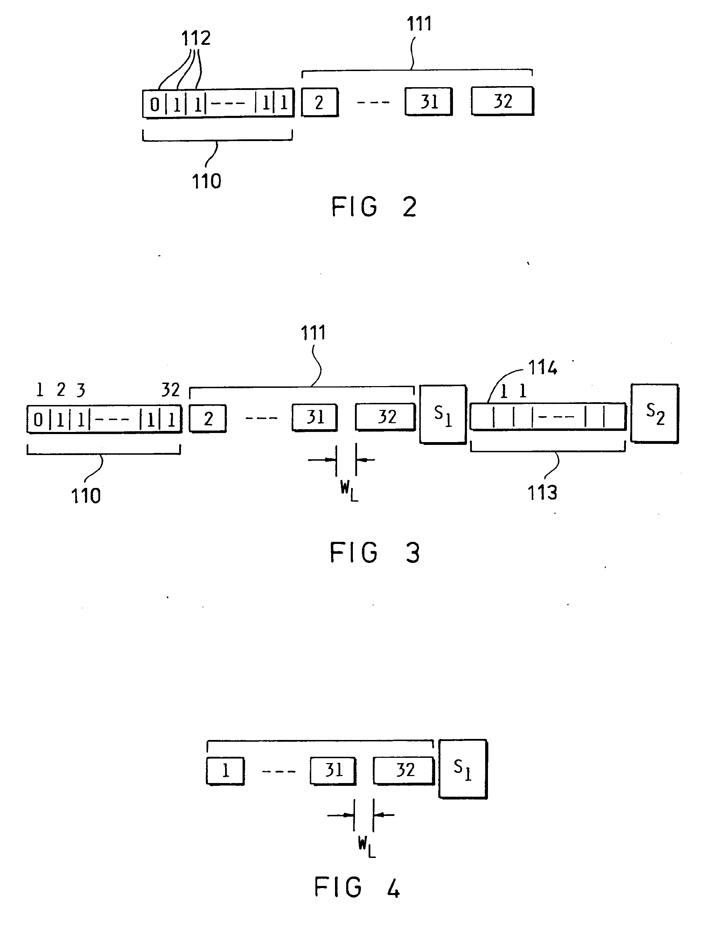

The format of one cycle which makes use of the present invention is shown in Figure 2. The Figure 2 cycle is made up of two phases, namely a reservation phase 110 and a data phase 111. The reservation phase 110 is notionally divided into a plurality of reservation time slots 112, the number of reservation slots corresponding to the number of stations. As already noted, the stations operate in a predetermined order, there is thus a "first" station of the cycle, a "second" station of the cycle etc., up to an nth station. There are thus a corresponding number of reservation slots 112, and each station may generate an indication in its corresponding reservation slot to indicate that it is to transmit a packet in that cycle. This indication of a packet to transmit is depicted by a logic "1" in Figure 2, with a contrary indication being depicted by logic "o". A "1" indication in a reservation slot effectively reserves a slot for the corresponding station to transmit in the following data phase of the cycle.

In theory, such reservation slots could be only one bit wide, if the station could determine exactly when a signal transmitted was received at the central node 101 of the network. In practice this is not possible, and the notional width of each reservation slot is therefore of a predetermined window length, which window length is determined by the uncertainties in the transmission. In practice, such measurement accuracy may be accurate to around 5 to 6 bits, and thus the window length may be approximately 10 bits, the bit length being determined by a carrier of e.g. square waves transmitted around the system. In order to provide a "1" indication (packet to transmit) in a reservation slot, the corresponding station may apply a pulse to that square wave for more than one bit, for example 2 to 3 bits. This corrupts the square wave signal and this can be detected by standard methods by the other stations.

After the reservation phase 110, the cycle shown in Figure 2 proceeds with its data phase 111. In this phase 111, each station which has reserved a slot in the reservation phase 110 transmits a packet, the transmission of packets being determined by the ordering of the stations. By knowing the predetermined order of station transmission within a cycle and by monitoring the setting of the reservation slots, each station can determine which station, if any, in the sequence of stations that are to transmit a packet during the current cycle, immediately precedes the station in question. Where a station determines it is the first station in said sequence of stations with data to transmit, it can commence its transmission. Each other station in said sequence must listen to the data packets being transmitted over the network and upon receiving the packet from the immediately-preceding station in said sequence, the station can transmit its data packet such as to be promptly received at the central node after the end of the packet from the preceding station. Of course, this assumes that each data packet carries an indicator of its originating station; however, this is standard practice in packet-based networks. Additionally, the station must have some pre-knowledge of the length of a packet so it can judge when the packet from the immediately preceding station in said sequence will end and then time its transmit start (which precedes the end of the preceding packet) accordingly. Where the packets are of fixed length, it is easy for each station to calculate from the start of the packet when it will end, and time its own transmission of a packet accordingly. However, if variable length packets are used, later stations in the cycle must determine from information in the packet itself when it will end, i.e. the packet itself contains information about its length.

It should be noted that there is a minimum packet length also referred to as minimum slot length Fₘᵢₙ. This minimum slot length is equal to the maximum propagation delay between the stations and the central node. If a station transmits a packet shorter than the minimum slot length, the time difference may be wasted, because the station next to transmit may not be able to detect the end of that packet sufficiently rapidly.

The minimum slot length Fₘᵢₙ is determined by the maximum length of the link from any of the stations to the central node Lₘₐₓ, the bit rate B, and the propagation speed C along the transmission path (e.g. optical fibre) of the star network. Thus:${\text{F}}_{\text{min}} \text{=} \frac{{\text{2BL}}_{\text{max}}}{\text{C}}$
If packets are of a variable length a header of length H will be required in addition to the minimum slot length, as well as the time L_{read} taken by station to interpret the packet length The effective minimum slot length is now:${\text{F}}_{\text{min}} \text{=} \frac{{\text{2BL}}_{\text{max}}}{\text{C}} {\text{+ H + L}}_{\text{read}}$

In practice, there must also be a delay between the end of the reservation phase and the start of the first packet within the data phase, and this must be at least twice Lₘₐₓ.

The cycle shown in Figure 2 may further be developed, as shown in Figure 3. In this case, the cycle still contains a reservation phase 110 and a data phase 111, but further contains an acknowledgement phase 113. The acknowledgement section 113 notionally contains acknowledgement slots 114, there being as many acknowledgement slots 114 as there are stations. It also can be seen that the acknowledgement phase 113 is separated from the data phase 111 by a delay S₁. The delay S₁ must be sufficient to give the recipient of the last packet long enough to reply in the next acknowledgement slot 114; further, if only the first station transmits in a cycle, then S₁ must be greater than Fₘᵢₙ. In practice, S₁ will need to be greater than the lower limits stated in the last sentence as the recipient must have time to check the validity of the packet.

Similarly, there is a delay S₂ after the end of the acknowledgement phase 113 before the next cycle can start. This delay gives the station long enough to reserve a slot in the next cycle if the packet which is applied to the cycle just ending was not acknowledged. If the ordering of the acknowledgement slots 114 is the same as the ordering of the reservation slots 112, then s₂ > Fₘᵢₙ-NW_{L} where W_{L} is the window length between the data packets and N is the number of packets. To acknowledge receipt of a data packet, the station receiving that data packet determines from the data packet which station applied the packet to the cycle and sets an indication in the acknowledgement slot 114 corresponding to the originating station. The originating station may thus detect that the packet has been successfully transmitted, by checking on the indication in its own acknowledgement slot.

As was mentioned above, reservations may be determined by a square wave signal applied to the network. In the arrangement shown in Figure 3, this can be readily achieved by having the last station to transmit apply a square wave to the cycle after the end of transmission of its data packet. This square wave transmission is maintained for the acknowledgement phase 113 and the reservation phase 110 of the next cycle and is terminated at the start of the transmission of a data packet in the next cycle. As was mentioned above, the setting of the slots is then achieved by the corruption of the square wave signal. In practice, it may be simplest to arrange for the square wave to be generated by the last station in the predetermined order rather than the last station actually to transmit in a cycle.

Where a station does not set a "l" indication in its reservation slot, it cannot transmit a data packet in that cycle. Since the cycle length is primarily determined by the data phase 111 (the relative length of the reservation phase 110 and the acknowledgement phase 113 being very much shorter), it can be seen that if one of the early stations in the predetermined order realises soon after the reservation phase 110 has passed that it wishes to transmit, it must wait for one whole cycle. However, if a station near the end of the predetermined order realises it has data to transmit at a similar point in the cycle, it must wait for nearly two cycles before it can transmit its packet (i.e. one whole cycle plus that part of a cycle occupied by the data packets of the preceding stations in the next cycle. There is thus a variation in the access delay from one station to another. This may be of particular importance where some stations require low access delays. In this case, the arrangement shown in Figure 3 may further be modified by permitting stations requiring low access states automatically to reserve slots every cycle, regardless of whether those stations will use the slots. In this arrangement, if a station has already reserved a slot, it will be able to transmit a data packet at any time up to its data packet slot, and therefore access delay is decreased. The station would always be able to transmit in the current cycle, rather than wait for the next.

The disadvantage of this is that each station must then be able to detect whether a station which has automatically reserved a slot is actually going to apply a data packet to the cycle, and if not, to advance its own transmission of a data packet accordingly. There may therefore be longer delays between one data packet and the next during the data phase 111.

Indeed, this process may be taken further, as shown in Figure 4. In this arrangement, there are no reservation slots, and each station is permitted to transmit a data packet at a predetermined point in the cycle. If a station recognises that the previous station, and indeed any station preceding that, is not going to transmit a data packet in the cycle, then it may advance the timing of its transmission of a data packet accordingly; in this case, where the middle of three stations has nothing to transmit the gap at the central node 101 between the packets from the other stations will be at least Fₘᵢₙ. Note that since each station does not know in advance which stations have data to transmit, the only circumstance in which it may start transmitting prior to having finished receiving a packet, is when the station recognises that the packet it is receiving is from the station immediately preceding it in said predetermined order.

The Figure 4 arrangement reduces the maximum access delay, and the implementation is simpler, particularly if the acknowledgement phase 113 was also omitted, as shown in Figure 4. However, there is a reduction in the utilisation efficiency because of the potential increased delay between one data packet and the next. Furthermore, in any practical system, in order to ensure synchronization of all stations to the system cycle, there needs to be some transmissions in each cycle even if no stations have data to send. This could be managed, for example, by requiring each station with no data to send to transmit an empty packet of length Fₘᵢₙ or less thereby flagging progress of the cycle to all other stations; alternatively, whenever a station recognises that its successor has not transmitted a packet, then it must do so itself even if this packet is empty.

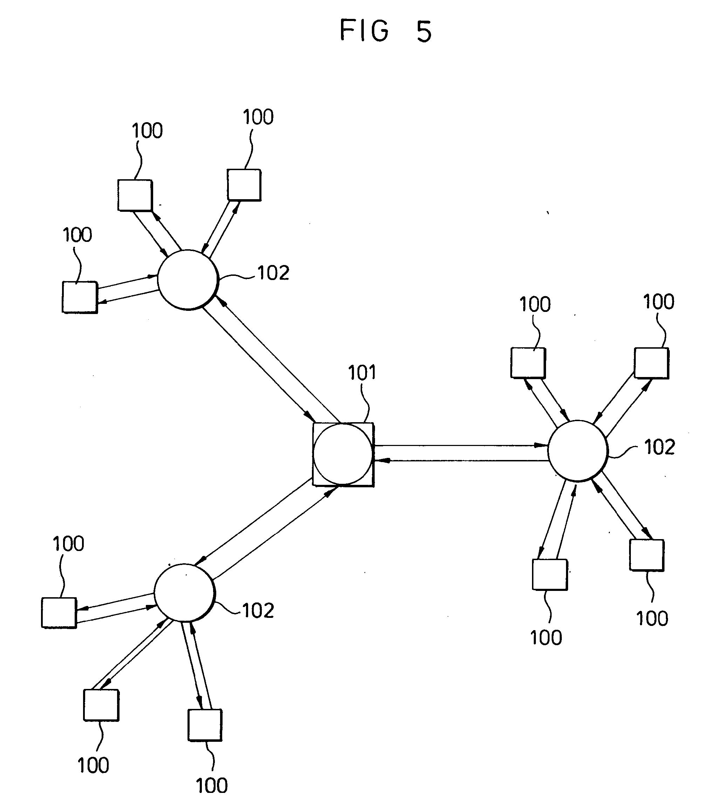

Figure 5 shows a modified form of the Figure 1 network in which couplers 102 have been introduced between the stations 100 and the central node 101 to reduce the data flow paths. It can be seen that between the stations 100 and the central node 101, there are couplers 102 to reduce the data flow paths. Thus, in transmission of a data packet from one station 100 to another station 100, data is transmitted from that station 100 to the immediate adjacent coupler 102, from that coupler 102 to the central node 101, from that central node 101 to the coupler 102 of the destination station, and then to the destination station itself. In order to maintain the topography of the network (that is, a central star node through which all packets are routed), each coupler 102 is constructed differently from the central node 101 (shown in Figure 6A). More particularly, as is illustrated in Figure 6B, each coupler has two parts, 202 and 203. The part 202 receives data packets and other signals from the stations 100 via lines 204 and transmits them via line 205 to the central node 101, whose direction is indicated by the arrow 206. Similarly the part 203 receives data packets and other signals from the central station 111 via line 207 and relays those signals to the stations via lines 28. It can thus be seen that signals coming from the stations are routed to the central node 101 only and do not collide with the signals coming from the central node 101. Note that the timing criteria for avoiding collisions at the central node 101 previously discussed with respect to the Figure 1 network will effectively still apply (thus the maximum amount by which a station can advance transmission to proceed the end of receipt of data from the immediately-preceding transmitting station is still the round trip delay time).

Although it is possible for the above described network to be operated with all stations 100 being started at the start-up of the network, it is also possible for a station 100 to join the network after it is running. Once the station has established the timing of the cycle, it can reserve a slot (e.g. the last empty slot) in the reservation phase of the cycle, and then use its reserved slot in the data phase to signal to the central node 101 that it has joined the network. The central node 101 can then determine a position for that station in the predetermined order of transmission, and the station can then operate normally. Such an arrangement does, of course, require the central node to be provided with intelligence; alternatively, one of the stations 100 can perform this role.

The above described network arrangement permits stations to regain synchronization quickly following errors on the network, with minimum data loss. There are several different errors possible. Firstly, the header of each packet should contain information defining the length of the packet, the station which originated the packet, and the address of the station which is to receive the packet. Failures in the addresses can be detected readily by known systems. Errors of information defining the length of the packet will cause more problems. A station may interpret this information to mean that a packet from an early station is shorter than it really is. If this occurs, and the station is the next to transmit, it will begin to transmit prematurely, and the packets will collide. There will therefore be no gap between the packets from those stations, and the station which is next to transmit will not recognise that a new packet has started. That subsequent station will interpret the collided packets as being from the first of the stations which originated the collided packets, and therefore will wait for the other station which originated the collided packet to arrive. If, however, the maximum packet length is exceeded, the subsequent station can then automatically begin to transmit. Therefore, only two packets are corrupted and the error does not propagate further in the network. Where a station determines that a packet is longer than it really is, no collision or corruption occurs, and there is only a lengthened delay before transmission.

Errors can also occur in the setting in the reservation slots. If a reservation slot is apparently set when no real reservation has been made, then this will cause a delay but will not corrupt data. If, however, a station makes a reservation which is not detected by one or more other stations, then problems can occur. Consider the situation in which a station A fails to recognise a reservation made by station B. If station A does not wish to transmit in the current cycle, it will merely see a cycle longer than it had expected. No data loss will occur. If station A does wish to transmit in the current cycle, and is arranged to transmit its data packet in the cycle before station B, station A will again see a cycle longer than it expected but no data loss will occur. If station A wishes to transmit in the current cycle and is arranged to transmit its data packet immediately after station B, then a collision will occur. The situation will then be the same as discussed previously for errors in the header length, with a collision between two data packets occurring, those two data packets being lost, but subsequent stations being unaffected after a delay. The situation is similar if station A is to transmit in the current cycle, and is arranged to transmit its data packet in the cycle some time, but not immediately, after station B. In this case a packet from station A will collide with another packet, but not with a packet from station B, otherwise, this situation is the same as before.

Errors can also occur in the acknowledgement slots. If acknowledgement does not occur the packet is retransmitted and provided the probability of this is arranged to be low by suitable protocols, then the delays imposed on the system are not great. The situation where a packet is unsuccessfully transmitted, but the appropriate acknowledgement bit it set, is more rare because it depends on two errors and for a normal system the probability of this is sufficiently low to be ignored.

Thus, the above described network arrangements provide a protocol for use in a communications system, and in a communications method, which is particularly, but not exclusively, adapted to star networks, and allows those networks to operate with a higher efficiency than using known protocols. Although there is some "unfairness" between the stations, with a station later in the predetermined order having longer access delays, this problem only exists at relatively low packet rates, because when the network approaches overload, stations have packets to transmit in every cycle and there is therefore no unfairness. With the present arrangements, errors do not propagate in the network so the network can continue to operate with little data loss. Effectively, the protocols of the above described network arrangements permit more than one successful packet to be in transit at any one time, which is not true of existing protocols applied to star networks.

Although in the embodiments of the invention described above, each station is only allowed to transmit one packet (of fixed or variable length) each cycle, it is possible to arrange for a station to transmit several packets during its turn (or slot) in the data phase of one cycle provided that an appropriate mechanism is established enabling the station next to transmit in the cycle to made a prejudgment regarding the end of data transmission by the station. Such a mechanism may either be by establishing a predetermined structure for data from the station so that the next station can be pre-programmed with this information, or by including information on the amount of data being transmitted, or the amount remaining to be transmitted, within the data itself.

Another possible refinement is to arrange for a station to have two or more associated slots for transmitting in the data phase of a cycle thereby enabling it to transmit more than once in the cycle. Such an arrangement is conceptually equivalent to having two (or more) stations at the same station address but each with its own slot in the cycle.

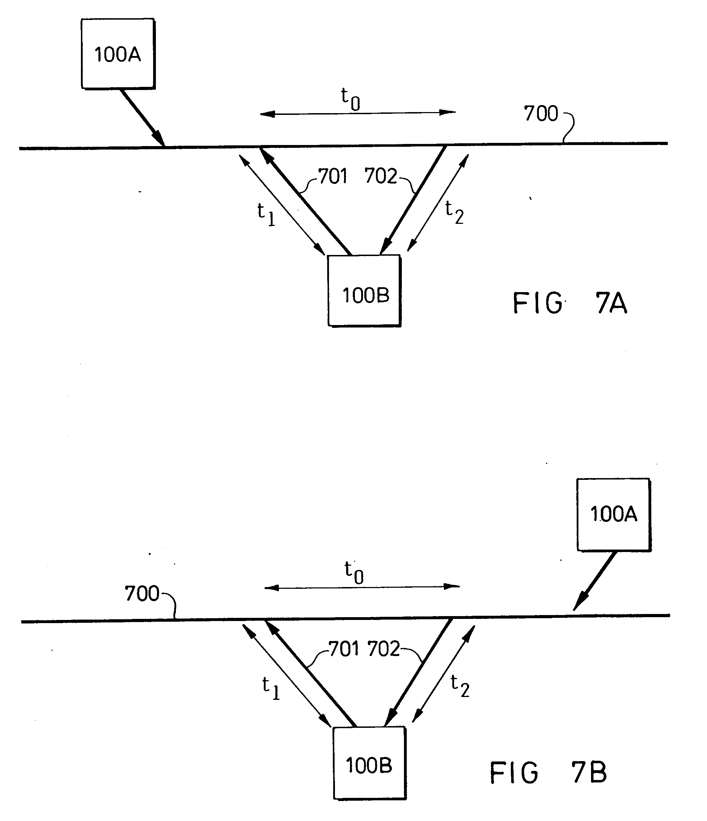

For embodiments of the present invention that utilize non-star topologies, the maximum amount by which a station can advance its transmission relative to the end of receipt of data from the immediately-preceding transmitting station, requires to be expressed in more general terms than the round-trip delay time between a station and a central node. Figure 7 illustrates the main factors to be considered in deriving a maximum advance value. In Figure 7A, stations 100A and 100B are two successively transmitting stations in a cycle (station 100B transmitting after station 100A), path 700 is a common data path taken by packets transmitted by stations 100A, 100B on their way to other stations in the network, path 701 is the outward signal path from station 100B, and path 702 is the inward signal path to station 100B. Time t₀ is the time taken for a signal to travel the length of the common path 700 between its junctions with paths 701 and 702, time t₁ is the time taken for a signal to travel the length of the path 701, and time t₃ is the time taken for a signal to travel the length of the path 702. For a packet transmitted by station 100B not to collide with a preceding packet transmitted by station 100A, the maximum advance that station 100B can apply is (t₁ + t₀ + t₂); at this advance the front of the packet from station 100B will join the common path 700 just after the end of the packet from station 100A has passed the junction of path 701 with the common path 700. However, if station 100A was in fact positioned as shown in Figure 7B, then the maximum advance could only be (t₁ - t₀ + t₂) which could be negative indicating that the station 100B needed to delay sending out its data packet beyond the time it detected the end of the packet from station 100A. Of course, the position of station 100A relative to paths 701 and 702 will frequently not be known to station 100B so that the worst case must be assumed. For certain topologies it is possible to derive simplified expressions for the maximum advance; one such case is, of course, a star topology. Thus for the Figure 1 network, the maximum advance is (t₁ + t₃) as t₀ will be substantially zero. For the Figure 5 network, in the case where stations 100A and 100B are connected to the same coupler 102 and the common path 700 extends from the coupler to the central node and back, the station 100A will in fact always be in the relationship of Figure 7A to station 100B so that the maximum advance is (t₁ + t₀ + t₂) which is equivalent to the round trip delay from station 100B to the central node. Other relative positionings of the stations 100A and 100B in the Figure 5 network produce the same result.

## Claims

1. A communications system having a plurality of stations (100) interconnected by transmission paths for the broadcast transmission of data therebetween, the system being arranged to operate cyclically with each station (100) being permitted to transmit data each cycle in a predetermined order of permitted transmissions, each data transmission including identity information indicative of the identity of the transmitting station (100), and at least one of said stations comprising:
- transmitting means for transmitting data over said transmission paths;
- receiving means for receiving data over said transmission paths; and,
- transmission control means operative when said one station is the first station with data to transmit in a current cycle. to cause said transmitting means to transmit that data, and when said one station has data to transmit in a cycle but is not said first station, to cause said transmitting means to begin transmitting data in the current cycle at a time which is in advance of when said receiving means will have finished receiving any data transmitted from the station immediately preceding the current station in said predetermined order, but which is judged by the transmission control means will avoid the transmissions of said one station colliding at any other station with any transmissions from said immediately-preceding station;
**characterised in that** said transmission control means comprises: first sub-means for determining, in the case where the said one station is not said first station, when said one station is the next station to transmit in a cycle by monitoring data transmissions received in the current cycle by the receiving means to identify the originating station of the transmissions, and second sub-means operative. when said first means has determined that the station is the next to transmit in the current cycle, to cause said transmitting means to transmit data at a timing dependent on the actual reception by said receiving means of transmissions from the immediately preceding station in the sequence of stations with data to transmit in the current cycle, this timing being in advance of when said one station has finished receiving data from said immediately-preceding station in said sequence at least in the case where said immediately-preceding station in said sequence is the station immediately preceding said one station in said order of permitter transmission.

2. A communications system according to claim 1, wherein said second sub-means comprises:
a) ascertaining means for ascertaining how far off is the end of data reception from said immediately-preceding station in said sequence; and
b) means for initiating transmission of data bu said transmitting means at a time preceding said end of data reception by an amount, no greater than the time: t₁ + t₀ + t₂
where:
- t₁ is the time taken for a data transmission from said one station to pass along an outward said transmission path from the station to reach any said transmission path, hereinafter the common path, used by said immediately-preceding station in said sequence in transmitting its data to all other stations except said one station,
- t₂ is the time taken for a data transmission from said immediately-preceding station to pass from said common path to said one station along an inward said transmission path thereto, and,
- t₀ is the time taken for a data transmission from said immediately-preceding station to pass along the common path from said outward path to said inward path, the time t₀ being negative where the data transmission from said immediately-preceding station passes said inward path before said outward path.

3. A communications system according to claim 2, wherein each station comprises means for transmitting a fixed amount of data during each cycle that it transmits data, said ascertaining means being operative to ascertain said end of data reception based on a determination of the progress of reception of data from said immediately-preceding station and a prior knowledge of the size of said fixed amount of data.

4. A communications system according to claim 2, wherein the amount of data transmitted by a said station in a cycle is variable and each said station comprises means operative when transmitting its data to include an indicator of the amount of data being transmitted, said ascertaining means of said one station being operative to ascertain said end of data reception based on a determination of the progress of reception of data from said immediately-preceding station and said indicator of the amount of data being transmitted.

5. A communications system according to any one of the preceding claims, wherein the plurality of stations (100) are interconnected in a star network via a central node (101), said second sub-means of said one station initiating transmission of data by said transmitting means at a time preceding said end of data reception from said immediately-preceding station by an amount no greater than the round trip taken for a transmission from the station to return via said central node (101).

6. A communications system according to any one of the preceding claims, wherein each cycle has an initial reservation phase and each station comprises reserving means for providing a reservation indication in a corresponding reservation time slot (112) if it is to transmit data in that cycle, said one station having reservation monitoring means for monitoring these reservation indications whereby to determined whether it is said first station in said sequence and, if not, to determine the identity of said immediately-preceding station in said sequence. said first sub-means being operative to determine when said one station is the station next to transmit by identifying the receipt of data from said immediately-preceding station identified by said reservation monitoring means.

7. A communications system according to claim 6, wherein said second sub-means is operative, when said one station is not said first station in said sequence, to cause the transmitting means to begin transmitting data before said receiving means has finished receiving data from said immediately-preceding station in said sequence, independently of whether said immediately-preceding station is also the station immediately preceding said one station in said order of permitted transmission.

8. A communications system according to claim 6 or claim 7, wherein the reserving means of said one station (100) is arranged always to indicate in the corresponding reservation time slot (112) that the station (100) is to transmit data irrespective of whether the station knows. at the time of said reservation phase, if it is to transmit data in the cycle.

9. A communications system according to any one of the claims 6 to 8, wherein each cycle has an acknowledgement phase and said one station further comprises acknowledgement means for indicating, when said one station receives data from a second one of the stations, that this data has been received, said acknowledgement means effecting this indication by insertion of a corresponding indication in an acknowledgement time slot (114) corresponding to said second one of the stations (100).

10. A communications system according to any one of claims 1 to 5, wherein the first sub-means of said one station in determining when said one station is the next-to-transmit station, monitors progress through the cycle in said order of predetermined transmission by identifying the or each earlier transmitting station in said cycle by its transmission, and by judging that a next station in said order is not going to transmit in said cycle upon a transmission not being received from that station during a timed period following the end of data reception from a station preceding said next station in said order.

## Patentansprüche

1. Ein Kommunikationssytem, das eine Mehrzahl von Stationen (100) aufweist, die durch Übertragungswege zur Sendeübertragung von Daten zwischen ihnen verbunden sind, wobei das System angeordnet ist, um zyklisch mit jeder Station (100) zu arbeiten, der es ermöglicht ist, Daten in jedem Zyklus in einer vorbestimmten Reihenfolge von zulässigen Übertragungen zu übertragen, wobei jede Datenübertragung Identitätsinformationen, die die Identität der Übertragungsstation (100) angeben, einschließt, und wobei zumindest eine der Stationen die folgenden Merkmale aufweist:
- eine Übertragungseinrichtung zum Übertragen von Daten über die Übertragungswege;
- eine Empfangseinrichtung zum Empfangen von Daten über die Übertragungswege;
- eine Übertragungssteuerungseinrichtung, die wirksam ist, wenn die eine Station die erste Station mit zu übertragenden Daten in einem derzeitigen Zyklus ist, um zu bewirken, daß die Übertragungseinrichtung diese Daten überträgt, und um zu bewirken, daß, wenn die eine Station Daten in einen Zyklus zu übertragen hat, aber nicht die erste Station ist, die Übertragungseinrichtung beginnt, Daten in dem derzeitigen Zyklus zu einem Zeitpunkt zu übertragen, der vor demjenigen liegt, an dem die Empfangseinrichtung den Empfang von irgendwelchen Daten beendet hat, die von der Station übertragen wurden, die der derzeitigen Station in der vorbestimmten Reihenfolge unmittelbar vorhergeht, wobei jedoch in Bezug hierauf durch die Übertragungssteuerungseinrichtung eine Beurteilung durchgeführt wird, daß es vermieden wird, daß die Übertragungen der einen Station an irgendeiner anderen Station mit irgendwelchen Übertragungen der unmittelbar vorhergehenden Station kollidieren;
dadurch gekennzeichnet, daß
die Übertragungssteuerungseinrichtung folgende Merkmale aufweist: eine erste Untereinrichtung, um in dem Fall, in dem die eine Station nicht die erste Station ist, zu bestimmen, wann die eine Station die nächste Station ist, um in einem Zyklus zu übertragen, durch Überwachen der Datenübertragungen, die in dem derzeitigen Zyklus durch die Empfangseinrichtung empfangen werden, um die Ursprungsstation der Übertragungen zu identifizieren, und eine zweite Untereinrichtung, die wirksam ist, wenn die erste Einrichtung bestimmt hat, daß die Station die nächste ist, um in dem derzeitigen Zyklus zu übertragen, um zu bewirken, daß die Übertragungseinrichtung Daten zu einem Zeitpunkt überträgt, der von dem tatsächlichen Empfang der Übertragungen von der unmittelbar vorhergehenden Station in der Reihenfolge von Stationen mit in dem derzeitigen Zyklus zu übertragenden Daten durch die Empfangseinrichtung abhängt, wobei dieser Zeitpunkt vor demjenigen liegt, zu dem eine Station den Empfang von Daten von der unmittelbar vorhergehenden Station in der Reihenfolge beendet hat, zumindest in dem Fall, in dem die unmittelbar vorhergehende Station in der Reihenfolge die Station ist, die der einen Station in der Reihenfolge der zulässigen Übertragung unmittelbar vorhergeht.

2. Ein Kommunikationssystem gemäß Anspruch 1, bei dem die zweite Untereinrichtung folgende Merkmale umfaßt:
(a) eine Feststellungseinrichtung zum Feststellen, wie weit das Ende des Datenempfangs von der unmittelbar vorhergehenden Station in der Folge entfernt ist; und
(b) eine Einrichtung zum Beginnen der Übertragung von Daten durch die Übertragungseinrichtung zu einem Zeitpunkt, der dem Ende des Datenempfangs um eine Größe voranschreitet, die nicht größer als die Zeit t₁+t₀+t₂ ist
wobei:
- t₁ die Zeit ist, die für eine Datenübertragung von der einen Station benötigt wird, um entlang eines nach außen gerichteten Übertragungsweges von der Station zu laufen, um irgendeinen Übertragungsweg, im Folgenden als gemeinsamer Weg bezeichnet, zu erreichen, der durch die unmittelbar vorhergehende Station in der Folge zur Übertragung ihrer Daten an alle anderen Stationen außer der einen Station verwendet wurde,
- t₂ die Zeit ist, die eine Datenübertragung der unmittelbar vorhergehenden Station benötigt, um von dem gemeinsamen Weg zu der einen Station entlang eines nach innen gerichteten Übertragungsweges zu dieser zu laufen, und
- t₀ die Zeit ist, die eine Datenübertragung von der unmittelbar vorhergehenden Station benötigt, um entlang des gemeinsamen Weges von dem nach außen gerichteten Weg zu dem nach innen gerichteten Weg zu laufen, wobei die Zeit t₀ negativ ist, wenn die Datenübertragung von der unmittelbar vorhergehenden Station den nach innen gerichteten Weg vor dem nach dem nach außen gerichteten Weg durchläuft.

3. Ein Kommunikationssystem gemäß Anspruch 2, bei dem jede Station eine Einrichtung zum Übertragen einer festen Menge von Daten während jedes Zyklusses, in dem sie Daten überträgt, umfaßt, wobei die Feststellungseinrichtung wirksam ist, um das Ende des Datenempfangs auf der Grundlage einer Bestimmung des Voranschreitens des Empfangs von Daten von der unmittelbar vorhergehenden Station und aufgrund der vorherigen Kenntnis der Größe der festen Menge von Daten festzustellen.

4. Ein Kommunikationssystem gemäß Anspruch 2, bei dem die Datenmenge, die durch die Station in einem Zyklus übertragen wird, veränderlich ist, und bei dem jede Station eine Einrichtung umfaßt, die beim Übertragen ihrer Daten wirksam ist, um eine Anzeige der zu übertragenden Datenmenge einzuschließen, wobei die Feststellungseinrichtung der einen Station wirksam ist, um das Ende des Datenempfangs auf der Grundlage einer Bestimmung des Voranschreitens des Empfangs von Daten von der unmittelbar vorhergehenden Station und durch die Anzeige der zu übertragenden Datenmenge feststellen.

5. Ein Kommunikationssystem gemäß einem der vorhergehenden Ansprüche, bei dem die Mehrzahl von Stationen in einem Sternnetzwerk über einen Zentralknoten (101) verbunden sind, wobei die zweite Untereinrichtung der einen Station eine Übertragung von Daten durch die Übertragungseinrichtung zu einem Zeitpunkt einleitet, der dem Ende des Datenempfangs von der unmittelbar vorhergehenden Station um einen Betrag vorhergeht, der nicht größer als der Umlauf für die Übertragung von der Station zurück an diese über den Zentralknoten (101) ist.

6. Ein Kommunikationssystem gemäß einem der vorhergehenden Ansprüche, bei dem jeder Zyklus eine anfängliche Reservierungsphase aufweist, und bei dem jede Station eine Reservierungseinrichtung umfaßt, um eine Reservierungsanzeige zum Bereitstellen eines entsprechenden Reservierungszeitschlitzes (112) zu schaffen, wenn sie in diesem Zyklus Daten übertragen will, wobei die eine Station eine Reservierungsüberwachungseinrichtung zum Überwachen dieser Reservierungsanzeiger aufweist, um dadurch festzustellen, ob sie die erste Station in der Reihenfolge ist, und wenn nicht, um die Identität der unmittelbar vorhergehenden Station in der Reihenfolge festzustellen, wobei die erste Untereinrichtung wirksam ist, um durch Identifizieren des Empfangs von Daten von der unmittelbar vorhergehenden Station, die durch die Reservierungsüberwachungseinrichtung identifiziert ist zu bestimmen, wann die eine Station die als nächste zu übertragende Station ist.

7. Ein Kommunikationssystem gemäß Anspruch 6, bei dem die zweite Untereinrichtung wirksam ist, wenn die eine Station nicht die erste Station in der Reihenfolge ist, um zu bewirken, daß die Übertragungseinrichtung die Übertragung von Daten zu beginnt, bevor die Empfangseinrichtung den Empfang von Daten von der unmittelbar vorhergehenden Station in der Reihenfolge beendet hat, unabhängig davon, ob die unmittelbar vorhergehende Station ebenfalls die unmittelbar vorhergehende der einen Station in der Reihenfolge der zulässigen Übertragung ist.

8. Ein Kommunikationssystem gemäß Anspruch 6 oder 7, bei dem die Reservierungseinrichtung der einen Station (100) immer angeordnet ist, um in dem entsprechenden Reservierungszeitschlitz (112) anzuzeigen, daß die Station (100) Daten übertragen will, unabhängig davon, ob die Station zum Zeitpunkt der Reservierungsphase weiß, ob sie in diesem Zyklus Daten übertragen wird.

9. Ein Kommunikationssystem gemäß irgendeinem der Ansprüche 6 bis 8, bei dem jeder Zyklus eine Bestätigungsphase aufweist, und bei dem die eine Station ferner eine Bestätigungseinrichtung umfaßt, um, wenn die eine Station Daten von einer zweiten der Stationen empfängt, anzuzeigen, daß diese Daten empfangen wurden, wobei die Bestätigungseinrichtung diese Anzeige durch Einfügen einer entsprechenden Anzeige in einen Bestätigungszeitschlitz (114), der der zweiten der Stationen (100) zugeordnet ist, bewirkt.

10. Ein Kommunikationssystem gemäß einem der Ansprüche 1 bis 5, bei dem die erste Untereinrichtung der einen Station zum Bestimmen, wann die eine Station die nächste zu übertragende Station ist, den Vorschub durch den Zyklus in der Reihenfolge der vorbestimmten Übertragung durch Identifizieren der oder jeder früheren übertragenden Station in dem Zyklus durch ihre Übertragung überwacht, und durch Beurteilen, daß eine nächste Station in der Reihenfolge in dem Zyklus keine Übertrageung vornehmen wird, wenn eine Übertragung nicht durch diese Station während einer zeitgesteuerten Periode, die dem Ende des Datenempfangs von einer Station, die der nächsten Station in der Reihenfolge vorhergeht, empfangen wird.

## Revendications

1. Système de communications comportant plusieurs stations (100) interconnectées par des chemins de transmission destinés à la transmission diffusée de données entre elles, le système étant aménagé pour fonctionner de façon cyclique, chaque station (100) étant autorisée à transmettre des données à chaque cycle selon un ordre prédéterminé de transmissions permises, chaque transmission de données comportant une information d'identité représentant l'identité de la station émettrice (100), et l'une desdites stations au moins comprenant:
- un moyen de transmission pour transmettre des données sur lesdits chemins de transmission;
- un moyen de réception pour recevoir des données sur lesdits chemins de transmission; et
- un moyen de commande de transmission fonctionnant lorsque ladite une station est la première station ayant des données à transmettre dans un cycle courant, en provoquant la transmission de ces données par ledit moyen de transmission, et lorsque ladite une station a des données à transmettre dans un cycle mais n'est pas ladite première station, en provoquant le début de la transmission des données dans le cycle courant par ledit moyen de transmission à un instant qui est en avance sur le moment où ledit moyen de réception a terminé de recevoir toutes les données transmises par la station précédant immédiatement la station courante dans ledit ordre prédéterminé, mais qui est estimé par le moyen de commande de transmission comme empêchant les transmissions de ladite une station d'entrer en collision en une quelconque autre station avec toute transmission provenant de ladite station immédiatement précédente;
caractérisé en ce que ledit moyen de commande de transmission comprend: un premier sous-moyen destiné à déterminer, dans le cas où ladite une station n'est pas ladite première station, le moment où ladite une station est la station suivante qui doit transmettre dans un cycle en surveillant les transmissions de données reçues dans le cycle courant par le moyen de réception afin d'identifier la station d'origine de la transmission, et un second sous-moyen fonctionnant, lorsque ledit premier moyen a déterminé que la station est la suivante à transmettre dans le cycle courant, en provoquant la transmission des données par ledit moyen de transmission, à un instant dépendant de la réception réelle par ledit moyen de réception, des transmissions provenant de la station immédiatement précédente dans la séquence des stations qui ont des données à transmettre dans le cycle courant, cet instant étant en avance sur le moment où ladite une station a terminé de recevoir des données provenant de ladite station immédiatement précédente dans ladite séquence, au moins dans le cas où ladite station immédiatement précédente dans ladite séquence est la station qui précède immédiatement ladite une station dans ledit ordre de transmission permis.

2. Système de communications selon la revendication 1, dans lequel ledit second sous-moyen comprend:
(a) un moyen de détermination destiné à constater à combien l'on se trouve de la fin de la réception des données par rapport à ladite station immédiatement précédente dans ladite séquence; et,
(b) un moyen pour initialiser la transmission des données par ledit moyen de transmission, à un instant qui précède ladite fin de réception des données d'une quantité qui n'est pas supérieure à la durée: t₁ + t₀ + t₂;
où:
- t₁ est le temps mis par une transmission de données provenant de ladite une station pour parcourir depuis la station un dit chemin de transmission vers l'extérieur, pour atteindre un dit chemin de transmission quelconque, ci-après le chemin commun, utilisé par ladite station immédiatement précédente dans ladite séquence en transmettant ses données à toutes les autres stations à l'exception de ladite une station,
- t₂ est le temps mis par une transmission de données provenant de ladite station immédiatement précédente pour être transférée vers celle-ci depuis ledit chemin commun à ladite une station, le long d'un chemin de transmission dit vers l'intérieur, et,
- t₃ est le temps mis par une transmission de données provenant de ladite station immédiatement précédente pour parcourir le chemin commun entre ledit chemin vers l'extérieur et ledit chemin vers l'intérieur, la durée t₀ étant négative lorsque la transmission des données provenant de ladite station immédiatement précédente parcourt ledit chemin vers l'intérieur avant ledit chemin vers l'extérieur.

3. Système de communications selon la revendication 2, dans lequel chaque station comprend un moyen destiné à transmettre une quantité fixe de données pendant chaque cycle où elle transmet des données, ledit moyen de constatation fonctionnant en constatant ladite fin de réception des données sur la base de la détermination de l'avancement de la réception des données provenant de ladite station immédiatement précédente et de la connaissance préalable de la taille de ladite quantité fixe de données.

4. Système de communications selon la revendication 2, dans lequel la quantité de données transmises dans un cycle par ladite station est variable, et chaque dite station comprend un moyen fonctionnant lors de la transmission de ses données en incluant un indicateur de la quantité de données transmises, ledit moyen de constatation de ladite une station fonctionnant en constatant ladite fin de réception des données sur la base de la détermination de l'avancement de la réception des données provenant de ladite station immédiatement précédente et dudit indicateur de la quantité de données transmises.

5. Système de communications selon l'une quelconque des revendications précédentes, dans lequel les différentes stations (100) sont interconnectées dans un réseau en étoile par l'intermédiaire d'un noeud central (101), ledit second sous-moyen de ladite une station initialisant la transmission des données par ledit moyen de transmission à un instant qui précède la fin de réception des données provenant de ladite station immédiatement précédente d'une quantité qui n'est pas supérieure au parcours du trajet d'aller et retour que met une transmission provenant de la station pour revenir par l'intermédiaire dudit noeud central (101).

6. Système de communications selon l'une quelconque des revendications précédentes, dans lequel chaque cycle comporte une phase de réservation initiale et chaque station comprend un moyen de réservation destiné à fournir une indication de réservation dans une fenêtre temporelle de réservation correspondante (112) si elle doit transmettre dans ce cycle, ladite une station comportant un moyen de surveillance de réservation destiné à surveiller ces indications de réservation déterminant par ce moyen s'il s'agit de ladite première station dans ladite séquence, et si tel n'est pas le cas, déterminant l'identité de ladite station immédiatement précédente dans ladite séquence, ledit premier sous-moyen fonctionnant en déterminant le moment où ladite une station est la station suivante à transmettre en identifiant la réception de données provenant de ladite station immédiatement précédente identifiée par ledit moyen de surveillance de réservation.

7. Système de communications selon la revendication 6, dans lequel ledit second sous-moyen fonctionne, lorsque ladite une station n'est pas ladite première station dans ladite séquence, en faisant commencer à transmettre des données par le moyen de transmission avant que ledit moyen de réception ait terminé de recevoir des données de ladite station immédiatement précédente dans ladite séquence, indépendamment du fait que ladite station immédiatement précédente est également la station qui précède immédiatement ladite une station dans ledit ordre de transmission permis.

8. Système de communications selon la revendication 6 ou la revendication 7, dans lequel le moyen de réservation de ladite une station (100) est aménagé de façon à toujours indiquer dans la fenêtre temporelle de réservation correspondante (112) que la station (100) doit transmettre des données indépendamment du fait que la station sait, au moment de ladite phase de réservation, si elle doit transmettre des données dans le cycle.

9. Système de communications selon l'une quelconque des revendications 6 à 8, dans lequel chaque cycle comporte une phase d'acquittement et ladite une station comporte en outre un moyen d'acquittement destiné à indiquer, lorsque ladite une station reçoit des données provenant d'une seconde station des stations, que ces données ont été reçues, ledit moyen d'acquittement effectuant cette indication par l'insertion d'une indication correspondante dans une fenêtre temporelle d'acquittement (114) correspondant à ladite seconde station (100) des stations.

10. Système de communications selon l'une quelconque des revendications 1 à 5, dans lequel, lors de la détermination du moment où ladite une station est la prochaine station à transmettre, le premier sous-moyen de ladite une station, surveille l'avancement dans le cycle dans ledit ordre de transmission prédéterminé en identifiant la ou chaque station émettrice précédente dans ledit cycle par sa transmission, et en estimant qu'une station suivante dans ledit ordre ne va pas transmettre dans ledit cycle si une transmission n'a pas été reçue de cette station pendant une durée qui suit la fin de la réception des données provenant d'une station précédant ladite station suivante dans ledit ordre.
